# EUROPEAN PATENT SPECIFICATION

(11) **EP 0 550 438 B1**
(45) Date of publication and mention of the grant of the patent: **13.09.1995**
(21) Application number: 91905656.4
(22) Date of filing: 06.03.1991
(51) Int. Cl.: F16L 59/14

(54) **A METHOD OF ESTABLISHING SUBTERRANEAN PIPELINES OF HEAT INSULATED, CONCENTRIC PIPES, SUCH A PIPELINE AND A PIPE ELEMENT THEREFOR**
HERSTELLUNGSVERFAHREN FÜR UNTERIRDISCHE PIPELINES AUS WÄRMEISOLIERTEN KONZENTRISCHEN ROHREN SOWIE PIPELINE UND ROHRELEMENT DAFÜR
PROCEDE DE CONSTRUCTION DE PIPELINES SOUTERRAINS COMPOSES DE TUYAUX CONCENTRIQUES A ISOLATION THERMIQUE, PIPELINE ET ELEMENT DE TUYAU CORRESPONDANT

(30) Priority: 06.03.1990 DK 573/90
(43) Date of publication of application: 14.07.1993
(73) Proprietor: ABB I.C. MÖLLER A/S, DK-7000 Frederecia (DK)
(72) Inventor: PEDERSEN, Hans Norgaard, DK-8700 Horsens (DK)
(74) Representative: Skoett-Jensen, Knud
(86) International application number: DK9100064
(87) International publication number: WO9114128

(56) References cited:
- CH-A- 600 234
- DE-A- 2 655 420
- DE-A- 3 603 886
- US-A- 2 924 245

## Description

The present invention relates to a heat insulated pipe system with concentric pipes for a heating medium and a transportation medium, respectively, preferably mounted in the ground.

In connection with many processing and extractive plants it is desirable to convey hot fluids through pipes over such long distances and perhaps at such low speed that the desired temperature cannot be maintained solely by the pipe being heat insulated. It could also come to a temporary stop of the fluid flow, during which the temperature could not be allowed to decrease. It is known to arrange for electrical heating underneath the heat insulation, but often it is preferred to use concentric pipes, in which the fluid pipe is surrounded by an insulated pipe for conveying hot water.

The concentric pipes are relatively easy to arrange and to join by a subterranean mounting, but since it is anticipated that the pipes will expand due to heating after the mounting and possibly later on will contract and expand by varying operational conditions, then care is taken to enable such movements by mounting of U-bent pipe elements in all straight pipeline sections, e.g. as closely as every 100 m. This makes the installation quite expensive, and besides it has not been practice to widely safeguard the insulation against intrusion of water from outside.

It is known that with the use of an outer steel pipe at the outside of the insulation layer it is possible to construct the pipeline by joining pipe elements, in which the inner conveying pipes are anchored in a pre-stretched condition, viz. by means of radial fin members welded in partly between the central pipe and the surrounding conveying pipe and partly between the latter and the exterior steel pipe. With this technique, which is known e.g. from US-A-2,924,245, it is possible to lay out long, straight pipelines without the use of axial compensators, but the mounting work is very expensive, and the pipe elements are heavy and expensive; moreover, the outer steel pipes are vulnerable to corrosion attacks, whereby there is a risk of water intruding into the insulation layer.

DE-A-2 655 420 intends to simplify this mounting work, while the three independent and concentric pipes are welded end to end. Further, the outer steel pipe may be protected with a concrete layer.

In connection with the present invention it has been recognized that it is possible to improve this technique widely by partial use of the special technology associated with district heating pipe systems, which is now a highly developed area. Here the protection of the insulation layer towards the surroundings has been brought to perfection, with the use of outer protective pipes of plastic and extremely tight joints therebetween, and moreover methods and sets of rules have been developed enabling the laying of long pipelines without the use of anchorings, U-bends or axial compensators.

By the invention it has been found possible to make use of this technique and know-how for improving and simplifying the said concentric pipe systems. It should of course be considered that a further pipe component has been added, viz. a centrally disposed pipe which will not necessarily have the same temperature as the surrounding 'district heating pipe', but as already mentioned as known it is possible to fix the central pipe to the surrounding inner pipe, whereby these pipes will act as a unitary pipe, which, according to the invention, can then be regarded as the inner pipe of an ordinary district heating pipe.

In the district heating pipe technology it is known that the pipes may be laid in the ground in long, straight and even slightly curved runs without any need for the provision of possibilities of expansion, not either by means of U-bent elements. The inner pipe is anchored to the outer protection pipe through a rigid insulation foam that sticks sufficiently to both pipes in order to anchor the pipes against mutual axial displacements, and the outer protection pipe is self anchoring by the frictional pressure exerted by the surrounding earth or sand material along a stretch of a sufficient length, this length being dependent of the force with which the pipe tends to expand axially. With the use of the interior double pipe considerably increased forces will occur by heating and cooling, but according to the invention it is recognized that the required anchoring or self stabilization will then only be a question of a corresponding increase of "the required length" of the pipe stretch.

Since conveying pipes of the type in question will normally come into use only when the stretches are rather long, e.g. more than a kilometer, it will almost always be possible to achieve a rigid frictional anchoring over a considerable part of the stretch. What will change in comparison to the laying of usual district heating pipes will only be the length of the so-called friction restrained stretches, i.e. those outermost lengths at both ends of a straight stretch, along which there will be no total frictional anchoring, and for the large picture it is not very significant whether just these end lengths will be somewhat longer than usually. By way of example it may be a question of an increase from 200 m to 400 m, but in return it will be achieved that over a length of perhaps 10 or 50 kilometers between these end portions it will not be required to mount as much as a single U-element or any other type of axial compensator.

At the ends of the stretch, whether this is more or less long, an associated problem will arise, viz. that the expansion displacement will be noticeably larger than normally in connection with district heating pipelines. but luckily this problem is very insignificant, because the displacements are practically equally easy to take up whether they amount to for example 15 or 30 cm. Relative to the saved U-bent pipe elements with associated excavations it will be of no importance whether at the ends it is a little more or less costly to arrange for the required take-up of the expectable displacements, e.g. with the use of bent out connections forced to be laterally displaced over a certain length. Alternatively even an anchoring to the earth of the pipe ends could be provided, this just requiring that the anchoring be dimensioned somewhat stronger than usually.

The invention can be realized by the use of ordinary district heating pipes that can be pushed onto an already assembled central pipe and be successively fixed thereto by means of the centering connector fins; also usable are district heating pipes with a laid-in central pipe of a similar length for successive assembling of both the central pipe and the surrounding pipe elements. The joints are relatively simple to work out, because the pipe elements are mutually displaceable until the final joining, whereby it is possible to work with a minimum of connector pipe elements.

In the following the invention is described in more detail with reference to the drawing, in which:-
Fig. 1 is a lateral view, partly in section, of a pipe element for use in a concentric dual pipe system,
Fig. 2 is a length sectional view of a pipe joint in such a system, and
Fig. 3 is a top view of an end portion of a straight stretch of the dual pipe system.

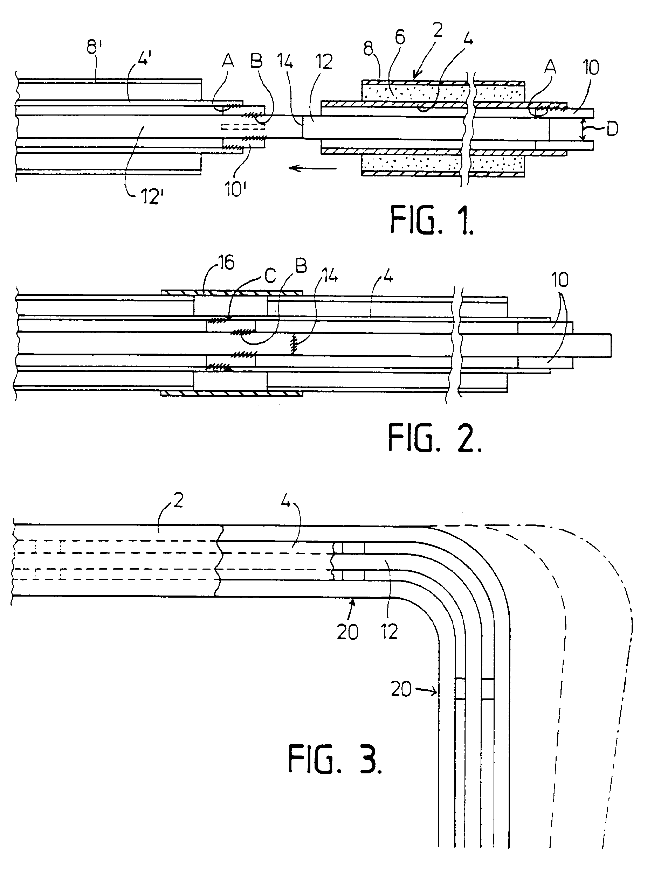

In Fig. 1 is shown a pipe element 2 that is basically a quite usual district heating pipe element consisting of an inner conductor pipe 4, an insulation layer 6 surrounding this pipe and an outer protection pipe 8 of plastic. The ends of the conductor pipe 4 project from the ends of the outer pipe parts 6 and 8.

At one end of this pipe element, as shown to the right, there is secured to the inside of the conductor pipe 4, by weldings A, a number of radial rib plates 10, which project in front of the pipe end and extend inwardly to an inner diameter D corresponding to the outer diameter of a centrally disposed conductor pipe 12. By the delivery of the pipe elements this pipe 12 may be stored inside the element 2, unless the elements 2 are to be inserted onto a long, already laid out pipe length 12. As shown at the middle the pipe element 12 may be slightly projecting towards the right from an already mounted, outer pipe element 2, and the pipe 12 in the element to be mounted thereafter may then be pushed towards the left and be joined with the first pipe 12 by a welding joint 14.

In the same connection welding joints B are made between the outside of the already mounted central pipe 12′ and the associated support edges of the rib plates 10′ or at least along the outermost, accessible length of these edges.

Thereafter the pipe element 2 is pushed to the left along the pipe 12 for bringing together the ends of the pipes 4 and 4′, and these ends are joined by a welding C, Fig. 2, just as by the mounting of district heat pipes. Then a sealed connection is established between the ends of the outer protective pipes 8 and 8′ by means of a connection sleeve 16, likewise as known from the district heating area.

In the element 2 the central pipe 12 has the same length as the conductor pipe 4, and when the butt joint 14 is provided with the pipe 12 slightly projecting at the left end, then the right end of the pipe 12 will be located correspondingly inside the right end of the pipe 4, but still in centering engagement with the rip plates 10. When the element 2, as mentioned, is pushed towards the left into the position shown in Fig. 2 the right end of the central pipe 12 will be brought to project from the end of the pipe 4 as far as the corresponding projection of the pipe 12′ in the previously mounted element 2′, i.e. the next element in the row can now be mounted just as here described, and so forth.

Through the weldings A and B a real anchoring is established between the central pipe 12 and the conductor pipe 4, whereby the pipes, also when they adopt mutually different temperatures, will act as a joined unit, occurring stresses just being distributed between the pipes. For rising temperatures in both of the pipes the expansion forces will be higher than for the 'district heating pipe' 4 alone, because the total cross sectional area of the iron has now been increased, but seen over a sufficiently large pipe length the pipe will nevertheless be stabilized by the surrounding earth pressure against carrying out expansion and contraction movements, an anchoring force transfer taking place through the rigid insulation foam 6.

By the rigid mounting of the central pipe 12 along the straight pipelength it will be achieved that also this pipe remains straight and undamaged inside the assembled, through-going pipe 4, without any use of axial compensators, and at the ends of the straight length this anchoring will imply that the pipes without further stabilization will extend at least approximately concentric also in such bends which are provided at the ends of the stretch with the purpose of taking up the length variations that may occur along the outermost, so-called friction restrained partial lengths, this being illustrated in Fig. 3. At the right hand end there may occur a pushing out of the bend shown, and it may be a further pushing out than would have been the case with a single pipe 4, as shown by a dot and dash line and a dotted line, respectively, but there is no technical problem in absorbing this extended displacement of the bend. Since the two pipes are rigidly interconnected at a place 20 not very far from the bend it cannot come to any significant displacement between the pipes in or at the bend, i.e. the pipes cannot damage each other.

The central pipe may be anchored otherwise to the the pipe 4, but it will be appreciated that the joining method illustrated in the drawing is easy to work with in practice.

## Claims

1. A method of establishing a heat insulated pipeline with concentric inner pipes (12,4) for conveying mutually different fluids, said inner pipes (12,4) being used for mutual, rigid anchoring by locally welding in centering means (10) between them, while the outermost of the inner pipes is anchored or preanchored to an outer pipe (8) surrounding an insulation layer (6) on the outside of said outermost inner pipe (4), the outer pipe (8) being suited for contributing to a stabilization of long and substantially straight lined stretches of the pipeline against carrying out substantial axial expansions and contractions in response to temperature variations in the inner pipes, characterized in that in connection with a subterranean mounting of the pipeline there is placed, on the central pipe (12), outer pipe elements (2) of the type "prefabricated district heating pipe elements", i.e. elements having an interior conductor pipe (4) with a surrounding layer (6) of a rigid insulation foam and an outermost protection pipe (8) of plastic surrounding the foam layer (6), the insulation foam forming a rigid anchoring between the interior conductor pipe (4) and the outer protection pipe (8), use being made of such pipe elements (2), the interior conductor pipes (4) of which have a suitably larger diameter than the central pipe (12) for the formation of a desired flow-through cross section between these pipes (4,12), the anchored connection between the central pipe (12) and the surrounding interior pipe (4) of these elements (2) being established by the end to end joining of the respective district heat pipe elements (2) by a welding in of the said centering means (10) between these pipes (12,4).

2. A method according to claim 1, characterized in that the centering means in the form of radial rib plates (10) are mounted at at least one end of the prefabricated district heat pipe elements, inwardly projecting from the inner conductor pipe thereof to a smaller diameter corresponding to the outer diameter of the central pipe (12), and that these centering means are welded to the central pipe at the mounting place subsequently to the district heating pipe element being displaced along the central pipe to a position, in which the end of the inner conductor pipe (4) thereof abuts the correspondingly projecting end portion of the inner pipe (4′) in the previously mounted district heating pipe element.

3. A pipe element for establishing a pipe line according to a method of claim 1, constituted by a prefabricated element of the type "district heating pipe", consisting of an inner steel pipe and an outer mantle pipe and, provided therebetween, a layer of rigid insulation foam forming an anchoring between these two pipes, characterized by a number of inwardly protruding rip members (10) being welded in at an end area of the inner side of the inner pipe so as to extend inwardly to a diameter corresponding to the outer diameter of a central pipe, onto which the pipe element is to be mounted.

4. A pipe element according to claim 5, characterized in that as a loose part it comprises a length of the relevant central pipe, optionally housed inside the pipe element in sliding engagement with the inner ends of the rip members (10).

## Patentansprüche

1. Verfahren zur Herstellung einer wärmeisolierten Pipeline mit konzentrischen inneren Rohren (12,4) zum Transport gegenseitig unterschiedlicher Fluide, wobei die besagten inneren Rohre (12,4) zur gegenseitigen starren Verankerung verwendet werden, indem lokal Zentriermittel (10) zwischen sie geschweißt werden, während das äußerste der inneren Rohre an einem äußeren Rohr (8) verankert oder vorverankert ist, das eine Isolierschicht (6) auf der Außenseite des besagten äußersten inneren Rohres (4) umgibt, wobei das äußere Rohr (8) dazu geeignet ist, zu einer Stabilisierung langer und im wesentlichen geradlinig verlegter Stücke der Pipeline gegen das Ausführen im wesentlichen axialer Expansionen und Kontraktionen als Antwort auf Temperaturschwankungen in den inneren Rohren beizutragen, dadurch gekennzeichnet, daß in Verbindung mit einer unterirdischen Anbringung der Pipeline äußere Rohrelemente (2) des Typs "vorgefertigte Fernheizungs-Rohrelemente" auf dem zentralen Rohr (12) angebracht werden, d.h. Elemente, die ein inneres Leitungsrohr (4) mit einer umgebenden Schicht (6) eines festen Isolierschaums und ein äußerstes Plastik-Schutzrohr (8) besitzen, das die Schaumschicht (6) umgibt, wobei der Isolierschaum eine feste Verankerung zwischen dem inneren Leitungsrohr (4) und dem äußeren Schutzrohr (8) bildet, wobei von solchen Rohrelementen (2) Gebrauch gemacht wird, deren innere Leitungsrohre (4) einen geeignet größeren Durchmesser als das zentrale Rohr (12) besitzen, um einen gewünschten Durchflußquerschnitt zwischen diesen Rohren (4,12) zu bilden, wobei die verankerte Verbindung zwischen dem zentralen Rohr (12) und dem umgebenden inneren Rohr (4) dieser Elemente (2) durch das End-an-End-Verbinden der jeweiligen Fernheizungs-Rohrelemente (2) durch Einschweißen der besagten Zentriermittel (10) zwischen diese Rohre (12,4) geschaffen wird.

2. Verfahren nach Anspruch 1, dadurch gekennzeichnet, daß die Zentriermittel in Form radialer Blattrippen (10) an zumindest einem Ende der vorgefertigten Fernheizungs-Rohrelemente befestigt werden, wobei sie von deren innerem Leitungsrohr bis zu einem engeren Durchmesser vorspringen, der dem Außendurchmesser des zentralen Rohres (12) entspricht, und daß diese Zentriermittel am Anbringungsort an das zentrale Rohr angeschweißt werden, nachdem das Fernheizungs-Rohrelement entlang dem zentralen Rohr in eine Position verschoben worden ist, in der das Ende seines inneren Leitungsrohr (4) an den entsprechenden überstehenden Endabschnitt des inneren Rohres (4′) in dem zuvor angebrachten Fernheizungs-Rohrelement anstößt.

3. Rohrelement zur Herstellung einer Pipeline gemäß einem Verfahren nach Anspruch 1, gebildet durch ein vorgefertigtes Element des Typs "Fernheizungsrohr" bestehend aus einem inneren Stahlrohr, einem äußeren Mantelrohr und einer dazwischen vorgesehenen Schicht eines festen Isolierschaums, der eine Verankerung zwischen diesen beiden Rohren bildet, gekennzeichnet durch eine Anzahl einwärts vorspringender Rippenglieder (10), die in einem Endbereich der Innenseite des inneren Rohrs so eingeschweißt sind, daß sie sich einwärts bis zu einem Durchmesser erstrecken, der dem Außendurchmesser eines zentralen Rohres entspricht, auf dem das Rohrelement anzubringen ist.

4. Rohrelement nach Anspruch 3, dadurch gekennzeichnet, daß es als loses Teil ein Stück des passenden zentralen Rohres umfaßt, das eventuell im verschiebbaren Eingriff mit den inneren Enden der Rippenglieder (10) in das Innere des Rohrelements eingebaut ist.

## Revendications

1. Procédé pour réaliser un pipeline à isolation thermique, avec des tuyaux internes concentriques (12,4) pour transporter des fluides mutuellement différents, lesdits tuyaux internes (12,4) étant utilisés pour l'ancrage mutuel, rigide par soudures locales de moyens de centrage (10) entre eux, tandis que le plus externe des tuyaux internes est ancré ou pré-ancré sur un tuyau externe (8) entourant une couche isolante (6) sur l'extérieur dudit tuyau interne le plus externe (4), le tuyau externe (8) étant apte à contribuer à une stabilisation d'étendues, longues et sensiblement rectilignes du pipeline contre l'effet d'expansions et de rétractions substantielles axiales en fonction de variations de température dans les tuyaux internes,
caractérisé en ce que, en relation à un montage souterrain du pipeline, il est placé, sur le tuyau central (12), des éléments de tuyau externes (2) du type "éléments de tuyau pour chauffage urbain préfabriqués", c'est-à-dire des éléments ayant un tuyau conducteur intérieur (4) avec une couche enveloppante (6) en une mousse isolante rigide, et un tuyau de protection externe (8) en plastique entourant la couche de mousse (6), la mousse isolante formant un ancrage rigide entre le tuyau conducteur intérieur (4) et le tuyau de protection externe (8), l'utilisation étant faite de tels éléments de tuyau (2), dont les tuyaux conducteurs intérieurs (4) présentent un diamètre plus grand, de façon appropriée, que le tuyau central (12) pour la formation d'une section transversale d'écoulement souhaité entre ces tuyaux (4,12), la liaison ancrée entre le tuyau central (12) et le tuyau intérieur enveloppant (4) de ces éléments (2) étant réalisée par la jonction bout à bout des éléments respectifs de tuyaux pour chauffage urbain (2), par un soudage desdits moyens de centrage (10) entre ces tuyaux (12,4).

2. Procédé selon la revendication 1,
caractérisé en ce que les moyens de centrage sous la forme de plaques à nervures radiales (10) sont montés sur au moins une extrémité des éléments de tuyau pour chauffage urbain préfabriqués, en faisant saillie vers l'intérieur du tuyau conducteur interne de ceux-ci jusqu'à un diamètre plus petit correspondant au diamètre externe du tuyau central (12), et en ce que ces moyens de centrage sont soudés au tuyau central à l'emplacement de montage après que l'élément de tuyau pour chauffage urbain a été déplacé le long du tuyau central vers une position dans laquelle l'extrémité du tuyau conducteur interne (4) de celui-ci vient en butée sur la partie d'extrémité faisant saillie, de façon correspondante, du tuyau interne (4′) dans l'élément de tuyau pour chauffage urbain préalablement monté.

3. Elément de tuyau pour réaliser un pipeline selon le procédé de la revendication 1, constitué par un élément préfabriqué du type "tuyau pour chauffage urbain", composé d'un tuyau en acier interne et d'un tuyau d'enveloppe externe et, prévue entre eux, une couche de mousse isolante rigide formant un ancrage entre ces deux tuyaux, caractérisé par une pluralité d'organes à nervures (10)
faisant saillie vers l'intérieur, qui sont soudés à une zone d'extrémité du côté interne du tuyau interne, afin de s'étendre intérieurement jusqu'à un diamètre correspondant au diamètre externe d'un tuyau central sur lequel l'élément de tuyau doit être monté.

4. Elément de tuyau selon la revendication 3,
caractérisé en ce que, comme partie amovible, il comprend une longueur du tuyau central concerné, éventuellement logé à l'intérieur de l'élément de tuyau en engagement coulissant avec les extrémités internes des organes à nervures (10).
